# EUROPÄISCHE PATENTANMELDUNG

(11) **EP 2 639 187 A1**
(43) Veröffentlichungstag der Anmeldung: **18.09.2013**
(21) Anmeldenummer: 13001245.3
(22) Anmeldetag: 12.03.2013
(51) Int. Cl.: B65G 1/137, G05D 1/02

(54) **Logistikanlage für ein Regallager**

(30) Priorität: 16.03.2012 AT 3192012
(71) Anmelder: LTW Intralogistics GmbH, 6922 Wolfurt (AT)
(72) Erfinder: Eberle, Konrad, 6900 Bregenz (AT); Gerber, Urs, 6900 Bregenz (AT)
(74) Vertreter: Gangl, Markus

(57) **Zusammenfassung**

Logistikanlage für ein Regallager (10), mit
- zumindest einem ersten (1) und einem zweiten (2) Förderfahrzeug, die entlang einer Referenzstrecke (3) verfahren, wobei die Referenzstrecke (3) zumindest einen Weichenbereich (W) aufweist,
- einer Steuervorrichtung (4), durch die in Abhängigkeit einer gemessenen Position (P) des ersten Förderfahrzeugs (1) entlang der Referenzstrecke (3) ein bestimmter Bereich (S1) der Referenzstrecke (3) für die Befahrung durch das zweite Förderfahrzeug (2) sperrbar ist, wobei bei Einfahren des ersten Förderfahrzeugs (1) in den Weichenbereich (W) der Weichenbereich (W), insbesondere vollständig, für das zweite Förderfahrzeug (2) gesperrt ist, und
- eine Einrichtung (5) zur Bestimmung der Bewegungsrichtung der Förderfahrzeuge (1, 2), durch die ein - die Bewegungsrichtung (R) der Förderfahrzeuge (1, 2) repräsentierendes - Signal (D) an die Steuervorrichtung (4) zuführbar ist, wobei durch die Steuervorrichtung (4) unter Berücksichtigung des die Bewegungsrichtung (R) des ersten Förderfahrzeugs (1) repräsentierenden Signals (D) der für das zweite Förderfahrzeug (2) gesperrte Bereich (S1) festlegbar ist.

## Beschreibung

Die Erfindung betrifft eine Logistikanlage für ein Regallager. Zudem betrifft die Erfindung ein Regallager mit einer solchen Logistikanlage sowie ein Verfahren zur Bewegungssteuerung von Förderfahrzeugen in einer Logistikanlage.

Auf dem Sektor der Regallager und der Steuerung für Förderfahrzeuge in solchen Regallagern gibt es schon die unterschiedlichsten Systeme. Wichtig dabei ist, eine schnelle und effiziente Beförderung von Lagergütern zu erreichen und zugleich eine hohe Sicherheit bei mehreren, sich im Regallager bewegenden Förderfahrzeugen zu garantieren.

Eine Möglichkeit um die Förderfahrzeuge in den Regallagern zu steuern besteht darin, dass diese über einen Materialflussrechner erfolgt, wobei fraglich ist, ob dies technisch überhaupt umsetzbar ist. Diese Steuerung wird auf der übergeordneten Lagerverwaltungsebene durchgeführt. Von diesem Materialflussrechner ist dann die Bewegung jedes einzelnen Förderfahrzeuges abhängig. Diese Art und Weise der Bewegungssteuerung bietet aber einen zu geringen Sicherheitslevel. Um eine Kollisionsvermeidung in einem solchen Materialflussreehner zu integrieren, wäre ein sehr großer Rechenaufwand notwendig, der mit der Anzahl der Förderfahrzeuge exponentiell ansteigt und somit vor allem bei großen Regallagern unwirtschaftlich ist.

Um eine solche aufwändige Kollisionssicherung nicht direkt in diese Lagerverwaltungsebene zu integrieren, können auch Lichtschranken an den Regalbediengeräten vorgesehen sein, damit diese sich erkennen können. Wenn eine Erkennung vorliegt und somit eine Kollision gerade noch vermieden wurde, muss dann aber durch einen Lagerarbeiter das Förderfahrzeug manuell frei gefahren werden. Dies ist sehr umständlich und führt bei hochautomatisierten Regallagern zu erheblichen Verzögerungen. Nachteilig ist zudem, dass solche Lichtschranken in einem Kurven-oder Weichenbereich nur eingeschränkt verwendet werden können, da sie nicht den vollen Überblick über den gesamten Kurven- oder Weichenbereich haben. Als Beispiel dafür sei auf die US 7,711,446 B2 verwiesen, welche einen Transportapparat zum Einsatz in einem Regallager zeigt, wobei jedes Fahrzeug einen Distanzsensor aufweist. Zusätzlich gibt es auch eine "on-board controller", über den die Geschwindigkeit errechnet werden kann.

Eine weitere Art einer Logistikanlage ist aus der EP 1 547 945 A2 bekannt. Darin wird die gesamte Verfahrstrecke - die unter anderem mehrere Weichenbereiche aufweist - der Förderfahrzeuge in einzelne Positionsfelder unterteilt und bei Einfahren eines Förderfahrzeuges in ein solches Positionsfeld dieser Bereich für ein anderes Förderfahrzeug gesperrt. Hierbei erfolgt somit immer ein Vergleich der absoluten Position der Förderfahrzeuge. Nachteilig bei dieser Logistikanlagensteuerung ist, dass immer mehrere Bereiche gleichzeitig gesperrt sind. Zudem sind einzelne gesperrte Bereiche oftmals relativ groß, wodurch viele Felder für Förderfahrzeuge gesperrt sind, obwohl die Gefahr einer Kollision aufgrund der großen Entfernung noch nicht gegeben wäre.

Weiters sind aus dem Stand der Technik Kollisionsverhinderungsvorrichtungen für im Wesentlichen gerade Verfahrenstrecken mit einem definierten Anfangspunkt und einem definierten Endpunkt bekannt. Diese sind somit für die Kollisionsverhinderung im Weichenbereich gänzlich ungeeignet. Ein Beispiel dafür ist die US 5,634,565, welche eine Methode zur Kollisionsverhinderung zwischen Ladekränen durch Geschwindigkeitsregelung zeigt. Unter anderem wird auch ein Risikofaktor und ausgehend von diesem ein Sicherheitsbereich ("safety margin") berechnet. Es gibt nur eine einzige Strecke (parallel running rails), auf der die insgesamt drei Kräne verfahren.

Weiters sei hierzu auf die GB 2 205 463 A verwiesen, welche ebenfalls ein Kollisionsverhinderungssystem zeigt, bei der die Bewegungsrichtung und die Geschwindigkeit für die Kollisionssicherung berücksichtigt wird. Bei geringer Geschwindigkeit können die Sicherheitsbereiche entsprechend verringert werden, wodurch jeweils andere Geräte auch bei relativer Nähe zueinander weiterhin ungehindert fahren können. Eine derartige Vorrichtung kann beim Einsatz in einem Weichenbereich nicht für eine ausreichende Kollisionssicherung sorgen.

Die Aufgabe der vorliegenden Erfindung besteht daher darin, eine gegenüber dem Stand der Technik verbesserte Logistikanlage zu schaffen. Insbesondere soll ein effizienteres Verfahren der Förderfahrzeuge möglich sein. Des Weiteren sollen die Förderfahrzeuge so nah wie möglich aneinander heran fahren können. Zudem sollen Kollisionen im Weichenbereich sicher verhindert werden.

Dies wird für eine Logistikanlage mit den Merkmalen von Anspruch 1 erreicht. Demgemäß ist vorgesehen, dass zumindest ein erstes und einem zweites Förderfahrzeug entlang einer Referenzstrecke verfahren, wobei die Referenzstrecke zumindest einen Weichenbereich aufweist. Weiters ist eine Steuervorrichtung vorgesehen, durch die in Abhängigkeit einer gemessenen Position des ersten Förderfahrzeugs entlang der Referenzstrecke ein bestimmter Bereich der Referenzstrecke für die Befahrung durch das zweite Förderfahrzeug sperrbar ist, wobei bei Einfahren des ersten Förderfahrzeugs in den Weichenbereich der Weichenbereich, insbesondere vollständig, für das zweite Förderfahrzeug gesperrt ist. Somit ist sichergestellt, dass es im Weichenbereich aufgrund der zumindest drei zusammenführenden Streckenabschnitte zu keiner Kollision zwischen den Förderfahrzeugen kommt. Zudem ist erfindungsgemäß weiters eine Einrichtung zur Bestimmung der Bewegungsrichtung der Förderfahrzeuge vorgesehen, durch die ein - die Bewegungsrichtung der Förderfahrzeuge repräsentierendes - Signal an die Steuervorrichtung zuführbar ist, wobei durch die Steuervorrichtung unter Berücksichtigung des die Bewegungsrichtung des ersten Förderfahrzeugs repräsentierenden Signals der für das zweite Förderfahrzeug gesperrte Bereich festlegbar ist, erreicht. Somit wird zumindest außerhalb der Weichenbereiche kein absolutes Feld gesperrt sondern immer in Abhängigkeit der Bewegungsrichtung ein Bereich um das jeweilige Förderfahrzeug für andere Förderfahrzeuge gesperrt.

Wenn die Referenzstrecke einen Weichenbereich aufweist, wobei bei Einfahren des ersten Förderfahrzeugs in den Weichenbereich der Weichenbereich zumindest teilweise für das zweite Förderfahrzeug gesperrt ist, dann liegt der Vorteil darin, dass nicht nur eine im Wesentlichen gerade Strecke vor Kollisionen gesichert ist, sondern auch der wesentlich unfallträchtigere Weichenbereich. Es gibt somit erfindungsgemäß eine doppelte Absicherung: Einerseits eine geschwindigkeits- und positionsabhängige Kollisionssicherung zwischen den Förderfahrzeugen und andererseits einen zusätzlichen und gesonderten Kollisionsschutz im Weichenbereich.

Es kann vorgesehen sein, dass der gesamte Weichenbereich für jedes andere Förderfahrzeug gesperrt ist, sobald sich ein Förderfahrzeug im Weichenbereich befindet. Um aber eine effizientere Ausnutzung der gesamten Logistikanlage zu erreichen, ist bevorzugt vorgesehen, dass der für das zweite Förderfahrzeug im Weichenbereich gesperrte Bereich in Abhängigkeit des die Bewegungsrichtung des ersten Förderfahrzeugs repräsentierenden Signals veränderbar, vorzugsweise verkleinerbar, ist. Das heißt, wenn zwei Förderfahrzeuge im Weichenbereich - vor allem in der Wechselgasse des Weichenbereichs - hintereinander fahren, dann können sich beide Förderfahrzeuge gleichzeitig im gesperrten Bereich befinden. Somit wird die Sperrung des Weichenbereichs für ein anderes Förderfahrzeug nur dann aufgehoben, wenn aufgrund der die Bewegungsrichtung der beiden Förderfahrzeuge repräsentierenden Signale keine Gefahr einer Kollision besteht. Diese Signale - sofern sie "positiv" sind - sind somit dem Weichenbereich-Sperrsignal übergeordnet.

Natürlich kann nicht nur ein solches Förderfahrzeug in einer Logistikanlage vorgesehen sein, sondern bevorzugt steuert die Steuervorrichtung jedes Förderfahrzeug in der Logistikanlage in Abhängigkeit dieser Bewegungsrichtungskollisionssicherung. Mit anderen Worten weist jedes Förderfahrzeug "schattenartig" mitfahrende Sperrbereiche auf, die bei Überlagerung eine gegenseitige Befahrung und somit eine Kollision verhindern.

Es ist möglich, dass sich der bestimmte gesperrte Bereich rund um das Förderfahrzeug oder seitlich und davor befindet. Bevorzugt ist allerdings vorgesehen, dass der bestimmte gesperrte Bereich in Bewegungsrichtung, vorzugsweise nur, vor dem ersten Förderfahrzeug liegt.

Die Steuervorrichtung kann theoretisch in einen übergeordneten Materialflussrechner integriert sein oder auch in eins der Förderfahrzeuge integriert sein. Bevorzugt ist allerdings vorgesehen, dass die Steuervorrichtung in einem stationären Steuerschrank angeordnet ist. Von diesem stationären Steuerschrank aus werden die einzelnen Förderfahrzeuge bevorzugt über funktechnische Signale gesteuert.

Für die Positionsermittlung der Förderfahrzeuge ist bevorzugt ein Messsystem vorgesehen, durch das die Position der Förderfahrzeuge entlang der Referenzstrecke messbar ist. Als Referenzstrecke können eine Schiene, ein Barcodeband, ein Laser oder ähnliches dienen. Weiters ist bevorzugt vorgesehen, dass die Bewegungsrichtung des ersten Förderfahrzeugs aus zumindest zwei nacheinander, vorzugsweise vom Messsystem, gemessenen Positionen des ersten Förderfahrzeugs ermittelbar ist.

Die Einrichtung zur Bestimmung der Bewegungsrichtung der Förderfahrzeuge kann direkt in jedes Förderfahrzeug integriert sein, Bevorzugt ist allerdings vorgesehen, dass die Einrichtung zur Bestimmung der Bewegungsrichtung der Förderfahrzeuge logischer Bestandteil der Steuervorrichtung ist.

Um eine noch effizientere Anpassung der einzelnen Sperrbereiche zu erreichen, ist bevorzugt vorgesehen, dass durch die Steuervorrichtung aus zumindest zwei nacheinander in regelmäßigen Zeitabständen, vorzugsweise vom Messsystem, gemessenen Positionen des ersten Förderfahrzeugs die Geschwindigkeit des ersten Förderfahrzeugs berechenbar, vorzugsweise messbar, ist, wobei in Abhängigkeit dieser berechneten Geschwindigkeit die Länge des bestimmten gesperrten Bereichs berechenbar ist. Somit ist die Größe des Sperrbereichs nicht immer gleich, sondern wird in Abhängigkeit der Geschwindigkeit berechnet. Dadurch muss keine absolute Sperrung eines Bereichs erfolgen sondern es kann auch eine Geschwindigkeitsreduzierung der Förderfahrzeuge erfolgen. D.h. je näher ein Förderfahrzeug an einen Kreuzungspunkt oder an einem anderen Förderfahrzeug ist, desto kleiner wird die zulässige Geschwindigkeit. Somit bildet die vorliegende Erfindung eine Art mitfahrenden Sperrkreis um jedes Fahrzeug, dessen Größe zusätzlich in Abhängigkeit der Geschwindigkeit ist.

Bevorzugt ist vorgesehen, dass durch das Messsystem ständig die Position jedes Förderfahrzeugs gemessen wird. Ständig heißt dabei, dass eine regelmäßige Positionsüberwachung, beispielsweise im Millisekundenbereich, erfolgt.

Als Förderfahrzeuge gelten bevorzugt Regalbediengeräte. Förderfahrzeuge können allerdings auch Vertikalförderer, selbstfahrende Verschiebewägen oder Elektrohängewägen sein. Bevorzugt sind die Förderfahrzeuge schienengeführt, sie können aber auch schienenlos, beispielsweise entlang von magnetischen Leitstrecken, verfahren.

Schutz wird auch begehrt für ein Regallager, insbesondere ein Hochregallager, mit einer erfindungsgemäßen Logistikanlage.

Weiters wird Schutz begehrt für ein Verfahren zur Bewegungssteuerung von Förderfahrzeugen in einer Logistikanlage mit den von einer Steuervorrichtung durchführbaren Schritten Messen der Position eines ersten Förderfahrzeugs entlang einer Referenzstrecke, Messen bzw. Berechnen der Bewegungsrichtung des ersten Förderfahrzeugs entlang der Referenzstrecke, Sperren eines Bereichs entlang der Referenzstrecke für ein zweites Förderfahrzeug in Abhängigkeit der Bewegungsrichtung des ersten Förderfahrzeugs und gegebenenfalls Sperren eines Weichenbereichs der Referenzstrecke für ein zweites Förderfahrzeug, wenn sich ein erstes Förderfahrzeug bereits im Weichenbereich befindet. Bevorzugt kann bei einem solchen Verfahren auch vorgesehen sein, dass die Sperrung eines Bereichs entlang der Referenzstrecke auch in Abhängigkeit der Geschwindigkeit zumindest eines Förderfahrzeugs durchgeführt wird.

Um ein möglichst effizientes Steuerungsverfahren zu erreichen ist bevorzugt weiters vorgesehen, dass in Abhängigkeit der Bewegungsrichtung und der Geschwindigkeit beider Förderfahrzeuge ein Bereich entlang der Referenzstrecke vor dem jeweiligen Förderfahrzeug gesperrt wird, wobei bei Überlappung der Bereiche beider Förderfahrzeuge eine gegenseitige Sperrung der Bereiche und/oder eine Geschwindigkeitsreduzierung der Förderfahrzeuge ausgelöst wird.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch ein Regallager mit einer Logistikanlage,
- Fig. 2: eine Ansicht eines Förderfahrzeuges,
- Fig. 3: eine Draufsicht auf ein Förderfahrzeug,
- Fig. 4: zwei Förderfahrzeuge in Abständen zu einander,
- Fig. 5: drei Förderfahrzeuge außerhalb eines Weichenbereiches und
- Fig. 6: ein Förderfahrzeug in einem Weichenbereich.

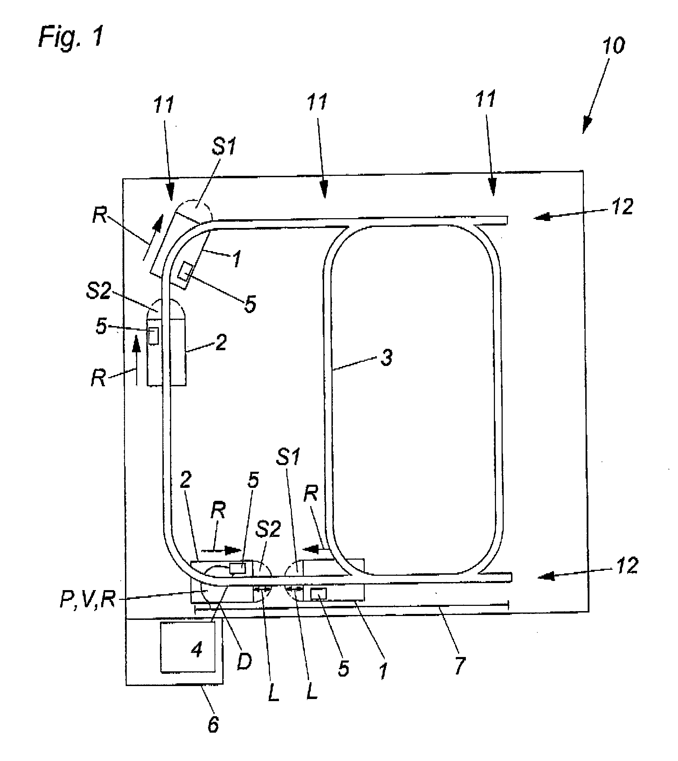

In Figur 1 ist ein Regallager 10 dargestellt, in welchem eine Referenzstrecke 3 aus Schienen angeordnet ist. Dabei ist die Referenzstrecke 3 in drei Regalgassen 11 und zwei Wechseigassen 12 geführt. Der Übergang zwischen den Wechselgassen 12 und den Regalgassen 11 wird jeweils von einem Weichenbereich W gebildet. In diesem Regallager 10 verfahren vier Förderfahrzeuge 1 und 2. Im linken oberen Bereich ist dabei bereits der große Vorteil der vorliegenden Erfindung ersichtlich, wonach ein zweites Förderfahrzeug 2 sehr nahe hinter einem ersten Förderfahrzeug 1 nachfahren kann, da sie sich nicht behindern und keine Sperrung notwendig ist. Bei beiden Förderfahrzeugen 1 und 2 liegt der gesperrte Bereich S1 bzw. S2 in Bewegungsrichtung R vor den Förderfahrzeugen 1 bzw. 2, wodurch keine gegenseitige Bewegungsbehinderung vorliegt.

Dagegen bewegen sich die Förderfahrzeuge 1 und 2 im unteren Bereich von Figur 1 aufeinander zu. Die Bewegungsrichtung R, wie auch die Position P und die Geschwindigkeit V werden über das Messsystem 7 gemessen bzw. berechnet und als Signale an die in die Förderfahrzeuge 1 bzw. 2 integrierte Einrichtung 5 zur Bestimmung der Bewegungsrichtung R der Förderfahrzeuge 1 bzw. 2 zugeführt. Diese Einrichtung 5 ist logischer Bestandteil der Steuervorrichtung 4, zu der die Einrichtung 5 die entsprechenden Signale D weiterleitet. Die Steuervorrichtung 4 (Steuer- oder Regeleinheit) ist im Steuerschrank 6 angeordnet und sendet, teilweise kabellos, Steuerbefehle an die einzelnen Förderfahrzeuge 1 bzw, 2. Aus der Berechnung der Steuervorrichtung 4 ergeben sich für jedes Förderfahrzeug 1 bzw. 2 die Sperrbereiche S1 und S2, wobei die Länge L dieser Sperrbereiche S1 und S2 in Abhängigkeit von der gemessenen Geschwindigkeit V der einzelnen Förderfahrzeuge 1 bzw. 2 ist. Beim aufeinander zu Bewegen von Förderfahrzeugen 1 bzw. 2, wie es in Figur 1 im unteren Bereich gezeigt ist, kann zunächst eine Geschwindigkeitsreduzierung beider Förderfahrzeuge 1 und 2 erfolgen. Bei Überlappung der gesperrten Bereiche S1 und S2 werden die beiden Förderfahrzeuge 1 und 2 gestoppt.

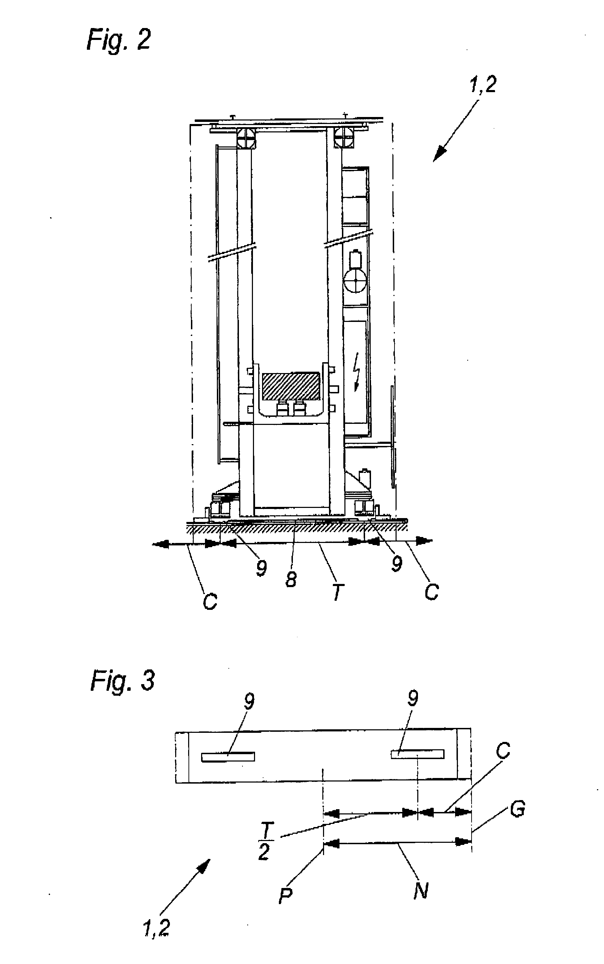

In Figur 2 ist ein Förderfahrzeug 1 bzw. 2 in Form eines Regalbediengeräts dargestellt, welches auf Schienen 8 geführte Räder 9 aufweist. Die Räder 9 befinden sich dabei in einem Radabstand T zueinander. Vor und hinter diesen Rädern 9 befindet sich jeweils ein Sicherheitsabstand C. Für die Überwachung der Förderfahrzeuge 1 bzw. 2 im Sicherheitsprogramm werden die Ist-Position P und die Ist-Geschwindigkeit V inklusive Richtung R benötigt. Im Stillstand belegt das Förderfahrzeug 1 bzw. 2 in beide Richtungen einen Bereich, der sich aus dem halben Radabstand T/2 und dem Sicherheitsabstand C vom Förderfahrzeug weg bildet (vom Radmittelpunkt aus gemessen). Beim Auslegen des Sicherheitsabstandes C ist nicht nur das am weitesten herausstehende Teil relevant, sondern es wird noch eine zusätzliche Reserve dazu addiert (siehe Figur 3). Daraus ergibt sich der Grenzpunkt G, der dem normalen Sicherheitsabstand N entspricht.

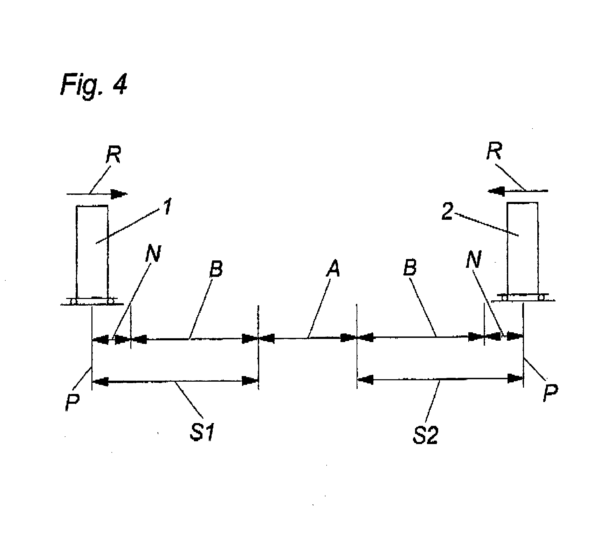

Setzt sich das Förderfahrzeug in Bewegung, wird der benötigte Kollisionssicherungsbereich um den Bremsweg B in die jeweilige Richtung R erhöht (siehe Figur 4). In Figur 4 ist der Abstand A zwischen den gesperrten Bereichen S1 und S2 gezeigt. Der Bremsweg B setzt sich aus dem Reaktionsweg und dem mechanischen Bremsweg zusammen. Die Zeit des Reaktionswegs hängt von folgenden Faktoren ab:
- Einlesezeit der Wegmessung in der Förderfahrzeug-Steuerung
- Interruptzeit der Förderfahrzeug-Steuerung
- Kommunikationstimeout vom Förderfahrzeug zur Steuervorrichtung
- Interruptzeit der Steuervorrichtung
- Kommunikationstimeout von der Steuervorrichtung zum Förderfahrzeug
- Interruptzeit der Förderfahrzeug-Steuerung
- Reaktionszeit des Notbremsenschütz
- Einfallzeit der Notbremse

Es ergibt sich eine Reaktionszeit im Zehntelsekunden- bzw. im Sekundenbereich und wirkt sich bei maximaler Geschwindigkeit mit etlichen Metern aus.

Um ein kollisionsfreies Bewegen der einzelnen Förderfahrzeuge 1 und 2 zu ermöglichen, wird jedes Förderfahrzeug 1 bzw. 2 mit jedem anderen kontrolliert. Wenn sich zwei Förderfahrzeugbereiche (natürlich inklusive Bremsweg B) überlappen, dann entsteht ein Kollisionsbereich. Jedoch wird die Reaktion der Kollision erst ausgelöst, wenn sich ein Förderfahrzeug 1 bzw. 2 auf ein anderes zu bewegt. Dadurch ist es möglich, dass sich die Förderfahrzeuge 1 bzw. 2 ohne Weiteres voneinander entfernen können. Alle anderen Förderfahrzeuge 1 bzw. 2 dürfen natürlich ohne Probleme weiterfahren.

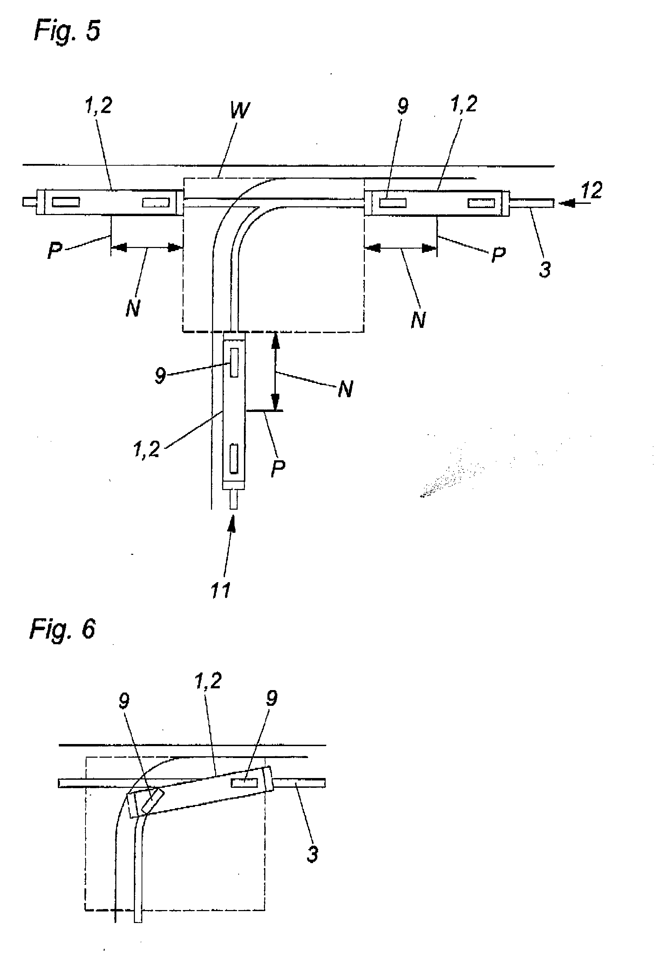

In den Figuren 5 und 6 ist ein Weichenbereich W eines Regallagers C ersichtlich. In Figur 5 steht das linke obere Fahrzeug 1 bzw. 2 so, dass ein anderes Förderfahrzeug 1 bzw. 2 ohne Weiteres in die oder aus der Regalgasse 11 fahren könnte. Das untere der dargestellten Förderfahrzeuge 1 bzw. 2 steht so, dass ein anderes Förderfahrzeug 1 bzw. 2 in der Wechselgasse 12 ohne Weiteres vorbeifahren kann. Sobald sich ein Förderfahrzeug 1 bzw. 2 im Weichenbereich W befindet, wird dieser Weichenbereich W für andere Förderfahrzeuge 1 bzw. 2 gesperrt. Der Weichenbereich W sollte so groß gewählt sein, dass ein problemloses Ausfahren, Einfahren und Vorbeifahren für Förderfahrzeuge 1 bzw. 2 möglich ist.

In Figur 6 befindet sich das Förderfahrzeug 1 bzw. 2 im Kurvenbereich einer Weiche der Referenzstrecke 3.

Der Weichenbereich bildet folgende Problematik: Wenn ein RBG (Regalbediengerät) von einer Regalgasse in die Wechselgasse fährt, benötigt diese einen definierten Bereich, in dem sich das RBG fortbewegen kann, ohne dass sich ein anderes RBG darin in Kollisionskurs befindet. Dieser Bereich ist der Weichenbereich.

Bei Weichen wird zunächst der Grenzwert des Weichenbereichs als Stopppunkt angegeben. Das RBG fährt bis zum Weichenanfang. Kommt das RBG in den Reservierungsbereich der Weiche, dann wird kontrolliert, ob das RBG in die Weiche einfahren darf. Erst nach einer Bestätigung fährt das RBG in den Weichenbereich hinein. Dort ändert sich der Kontrollbereich für das RBG, denn ab jetzt muss es den einzufahrenden Bereich auf mögliche Hindernisse kontrollieren. Der Reservierungsbereich wird so groß gewählt, dass ein RBG ohne ruckeln durch den freien Weichenbereich durchfahren könnte. Wenn im Weichenbereich ein RBG in der Kurve steht, darf kein Anderes hineinfahren. Im Gegensatz dazu dürfen bis zu zwei RBG's auf der geraden Strecke im Weichenbereich zusammenfahren, jedoch darf dann keines in die Kurve fahren. Die Stellung der Weiche in der Software hat damit gar nichts mit der realen Stellung zu tun.

## Patentansprüche

1. Logistikanlage für ein Regallager (10), mit
- zumindest einem ersten (1) und einem zweiten (2) Förderfahrzeug, die entlang einer Referenzstrecke (3) verfahren, wobei die Referenzstrecke (3) zumindest einen Weichenbereich (W) aufweist,
- einer Steuervorrichtung (4), durch die in Abhängigkeit einer gemessenen Position (P) des ersten Förderfahrzeugs (1) entlang der Referenzstrecke (3) ein bestimmter Bereich (S1) der Referenzstrecke (3) für die Befahrung durch das zweite Förderfahrzeug (2) sperrbar ist, wobei bei Einfahren des ersten Förderfahrzeugs (1) in den Weichenbereich (W) der Weichenbereich (W), insbesondere vollständig, für das zweite Förderfahrzeug (2) gesperrt ist, und
- eine Einrichtung (5) zur Bestimmung der Bewegungsrichtung der Förderfahrzeuge (1, 2), durch die ein - die Bewegungsrichtung (R) der Förderfahrzeuge (1, 2) repräsentierendes - Signal (D) an die Steuervorrichtung (4) zuführbar ist, wobei durch die Steuervorrichtung (4) unter Berücksichtigung des die Bewegungsrichtung (R) des ersten Förderfahrzeugs (1) repräsentierenden Signals (D) der für das zweite Förderfahrzeug (2) gesperrte Bereich (S1) festlegbar ist.

2. Logistikanlage nach Anspruch 1, wobei der für das zweite Förderfahrzeug (1) im Weichenbereich (W) gesperrte Bereich in Abhängigkeit des die Bewegungsrichtung (R) des ersten Förderfahrzeugs (1) repräsentierenden Signals (D) veränderbar, vorzugsweise verkleinerbar, ist.

3. Logistikanlage nach Anspruch 1 oder 2, wobei der bestimmte gesperrte Bereich (S1) in Bewegungsrichtung (R) vor dem ersten Regalbediengerät (1) liegt.

4. Logistikanlage nach einem der Ansprüche 1 bis 3, wobei die Steuervorrichtung (4) in einem stationären Steuerschrank (6) angeordnet ist.

5. Logistikanlage nach einem der Ansprüche 1 bis 4, mit einem Messsystem (7), durch das die Position (P) der Förderfahrzeuge (1, 2) entlang der Referenzstrecke (3) messbar ist.

6. Logistikanlage nach einem der Ansprüche 1 bis 5, wobei die Bewegungsrichtung (R) des ersten Förderfahrzeugs (1) aus zumindest zwei nacheinander, vorzugsweise vom Messsystem (7), gemessenen Positionen (P) des ersten Förderfahrzeugs (1) ermittelbar ist.

7. Logistikanlage nach einem der Ansprüche 1 bis 6, wobei die Einrichtung (5) zur Bestimmung der Bewegungsrichtung (R) der Förderfahrzeuge (1, 2) logischer Bestandteil der Steuervorrichtung (4) ist.

8. Logistikanlage nach einem der Ansprüche 1 bis 7, wobei durch die Steuervorrichtung (4) aus zumindest zwei nacheinander in regelmäßigen Zeitabständen, vorzugsweise vom Messsystem (7), gemessenen Positionen (P) des ersten Förderfahrzeugs (1) die Geschwindigkeit (V) des ersten Förderfahrzeugs (1) berechenbar, vorzugsweise messbar, ist, wobei in Abhängigkeit dieser berechneten Geschwindigkeit (V) die Länge (L) des bestimmten gesperrten Bereichs (S1) berechenbar ist.

9. Logistikanlage nach einem der Ansprüche 5 bis 8, wobei vom Messsystem (7) ständig, vorzugsweise im Millisekundenbereich, die Position (P) jedes Förderfahrzeugs (1, 2) messbar ist.

10. Logistikanlage nach einem der Ansprüche 1 bis 9, wobei die Referenzstrecke (3) zumindest einer Regalgasse (11) und zumindest eine Wechselgasse (12) aufweist, wobei der Weichenbereich (W) die Regalgasse (11) und die Wechselgasse (12) verbindet.

11. Regallager (10), insbesondere Hochregallager, mit einer Logistikanlage nach einem der Ansprüche 1 bis 10.

12. Verfahren zur Bewegungssteuerung von Förderfahrzeugen (1, 2) in einer Logistikanlage, insbesondere nach einem der Ansprüche 1 bis 10, mit den von einer Steuervorrichtung (4) durchführbaren Schritten:
- Messen der Position (P) eines ersten Förderfahrzeugs (1) entlang einer Referenzstrecke (3),
- Messen bzw. Berechnen der Bewegungsrichtung (R) des ersten Förderfahrzeugs (1) entlang der Referenzstrecke (3),
- Sperren eines Bereichs (S1) entlang der Referenzstrecke (3) für ein zweites Förderfahrzeug (2) in Abhängigkeit der Bewegungsrichtung (R) des ersten Förderfahrzeugs (1) und
- vorzugsweise vollständiges Sperren eines Weichenbereichs (W) der Referenzstrecke (3) für ein zweites Förderfahrzeug (2), wenn sich ein erstes Förderfahrzeug (1) bereits im Weichenbereich (W) befindet.

13. Verfahren nach Anspruch 12, wobei die Sperrung eines Bereichs (S1, S2) entlang der Referenzstrecke (3) auch in Abhängigkeit der Geschwindigkeit (V) zumindest eines Förderfahrzeugs (1, 2) durchgeführt wird.

14. Verfahren nach Anspruch 13, wobei in Abhängigkeit der Bewegungsrichtung (R) und der Geschwindigkeit (V) beider Förderfahrzeuge (1, 2) ein Bereich (S1, S2) entlang der Referenzstrecke (3) vor dem jeweiligen Förderfahrzeug (1, 2) gesperrt wird, wobei bei Überlappung der Bereiche (S1, S2) beider Förderfahrzeuge (1, 2) eine gegenseitige Sperrung der Bereiche und/oder bei Annäherung der Bereiche (S1, S2) eine Geschwindigkeitsreduzierung der Förderfahrzeuge (1, 2) ausgelöst wird.
